**Europäisches Patentamt**

(19) **European Patent Office**

**Office européen des brevets**

(11) Veröffentlichungsnummer: **0 001 613**
**B1**

(12) # EUROPÄISCHE PATENTSCHRIFT

(45) Veröffentlichungstag der Patentschrift:
**29.09.82**

(51) Int. Cl.³: **C 09 B 48/00**, C 07 D 471/02

(21) Anmeldenummer: **78101120.0**

(22) Anmeldetag: **11.10.78**

(54) **Verfahren zur Herstellung der gamma-Kristallmodifikation des linearen trans-Chinacridons.**

(30) Priorität: **22.10.77  DE 2747508**

(43) Veröffentlichungstag der Anmeldung:
**02.05.79 Patentblatt 79/9**

(45) Bekanntmachung des Hinweises auf die Patenterteilung:
**29.09.82 Patentblatt 82/39**

(84) Benannte Vertragsstaaten:
**CH DE FR GB**

(56) Entgegenhaltungen:
**CH-A-381 783**
**CH-A-405 560**
**DE-A-1 469 623**
**DE-B-1 181 159**
**DE-B-1 184 881**
**DE-B-1 268 586**
**FR-A-1 262 270**
**FR-A-1 264 481**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT,
Postfach 80 03 20, D-6230 Frankfurt/Main 80 (DE)**

(72) Erfinder: **Kroh, Adolf, Vorderstrasse 27, D-6251 Selters
(DE)**
Erfinder: **Fuchs, Otto, Dr., Oestricher Weg 11,
D-6000 Frankfurt/Main 71 (DE)**
Erfinder: **Spietschka, Ernst, Dr., Kirchweg 4,
D-6270 Idstein/Taunus (DE)**

Verfahren zur Herstellung der γ-Kristallmodifikation des linearen trans-Chinacridons

Die γ-Modifikation des linearen trans-Chinacridons, die als eines der echtesten Rotpigmente sehr grosse Bedeutung zur Pigmentierung von Lacken und Anstrichfarben und zum Einfärben von Kunststoffen erlangt hat, kann nach verschiedenen Verfahren erhalten werden:

Nach der US-PS 2 844 581 wird z.B. die γ-Kristallphase des Chinacridons durch Salzvermahlung von kristallinem linearen Chinacridon (das z.B. nach der US-PS 2 821 529 durch Ringschluss von 2,5-Dianilino-3,6-dihydro-dialkylterephthalat in indifferenten Lösemitteln bei 225–300 °C und Oxidation des isolierten Dihydrochinacridons mit milden Oxidationsmitteln erhalten wird) und Behandeln des Mahlgemisches mit Dimethylformamid erhalten.

In den FR-PS 1 226 825 und 1 233 785, der GB-PS 868 360 und der BE-PS 611 271 wird die Herstellung von linearem Chinacridon durch Ringschluss von 2,5-Dianilino-terephthalsäure in sauren Kondensationsmittel beschrieben.

Als saure Kondensationsmittel kommen insbesondere Polyphosphorsäure und auch deren saure Ester in Frage. Das nach diesen Ringschlussverfahren erhaltene amorphe stark agglomerierte Rohchinacridon, das in schlecht-kristalliner α-Modifikation des Chinacridons anfällt, kann, wie in der DE-PS 1 268 586 beschrieben, durch Erhitzen, gegebenenfalls unter Druck, auf 100–200 °C in Lösemittel-Wasser-Gemischen in die γ-Modifikation des Chinacridons überführt werden. Arbeitet man nach den oben beschriebenen Verfahren und führt den Ringschluss in weniger als der 5fachen Gewichtsmenge der genannten sauren Kondensationsmittel – bezogen auf eingesetzte 2,5-Dianilino-terephthalsäure – durch, was wegen der geringeren Abwasserbelastung durch das Polyphosphorsäure- bzw. Polyphosphorsäureesterhydrolysat und auch wegen der Kostenersparnis anzustreben ist, so gelingt die vollständige Überführung der so erhaltenen Rohchinacridone in die reine γ-Modifikation, vor allem bei Verwendung von technisch leicht handhabbaren, gut regenerierbaren und preisgünstigen Lösemitteln wie Alkoholen und Ketonen nicht. Für die technische Durchführung dieses Verfahrens ist aber gerade der Einsatz dieser Lösemittel von Bedeutung, da sie sich praktisch quantitativ nach der Behandlung des Chinacridons durch einfache Destillation oder noch günstiger durch Wasserdampfdestillation aus der Pigmentsuspension entfernen lassen und direkt oder nach Rektifikation wieder einsetzbar sind. Durch die praktisch quantitative Regenerierbarkeit werden weder Abwasser noch Abluft durch Lösemittel belastet.

Eine glatte Umwandlung in die γ-Modifikation gelingt nur, wenn man das Rohchinacridon vor dem Finish einem Alkaliauszug, wie z.B. in der DE-PS 1 184 881 im Beispiel 1 beschrieben, unterzieht. Arbeitet man ohne Alkaliauszug, so werden rot-violette Produkte erhalten, die neben der γ-Modifikation grössere Mengen der rot-violetten β-Modifikation des Chinacridons enthalten.

Aus der FR-PS 1 264 481 ist es bekannt, 2,5-Dianilino-terephthalsäure mit der 4fachen Gewichtsmenge Polyphosphorsäure bei 150 °C dem Ringschluss zu unterwerfen, das Produkt in Wasser zu hydrolysieren, zu isolieren, zunächst mit Wasser, anschliessend mit einer Sodalösung und hierauf erneut mit Wasser zu waschen und zu trocknen. Das so erhaltene Produkt der α-Modifikation wird anschliessend in Dimethylformamid erhitzt, abfiltriert, mit Alkohol gewaschen und getrocknet, wobei ein reines Produkt der γ-Phase erhalten wird. Verfährt man jedoch entsprechend der DE-AS 1 181 159, wobei man den Ringschluss mit der 2- bis 7fachen Menge Polyphosphorsäure bei 85 bis 120 °C durchführt, anschliessend aber das Produkt aus dem Reaktionsgemisch mit wassermischbaren organischen Lösemitteln, gegebenenfalls im Gemisch mit Wasser, abtrennt, so erhält man ein Produkt der β-Kristallphase.

Aus der FR-PS 1 262 270 ist es bekannt, kornweiche Pigmente aus der Reihe der linearen Chinacridone dadurch herzustellen, dass man das Rohpigment mit einem organischen Lösemittel vermahlt und dieses hierauf bis zur Erreichung einer pulvrigen Beschaffenheit des Pigments entfernt. Wenn man nach dem Beispiel 1 ein aus Schwefelsäure umkristallisiertes Ausgangsmaterial mit Aceton behandelt, erhält man ein Gemisch aus Produkten der α- und β-Kristallphase.

Es wurde nun gefunden, dass eine einwandfreie Umwandlung des Rohchinacridons in die reine γ-Kristallmodifikation ohne vorherigen Alkaliauszug gelingt, wenn man die wässrige Suspension des Rohchinacridons, das durch Ringschluss von 2,5-Dianilino-terephthalsäure in Polyphosphorsäure bzw. einem sauren Polyphosphorsäuremethylester und Hydrolyse erhalten wurde, in Gegenwart von Alkoholen oder Ketonen einer intensiven Nassmahlung unterwirft. Das so erhaltene desagglomerierte Rohchinacridon der α-Phase lässt sich dann ohne Schwierigkeiten durch Erhitzen in die reine γ-Phase überführen.

Die Erfindung betrifft deshalb ein Verfahren zur Herstellung der γ-Modifikation des unsubstituierten linearen trans-Chinacridons durch Ringschluss der 2,5-Dianilino-terephthalsäure mit der 2,5- bis 4fachen Gewichtsmenge, bezogen auf 2,5-Dianilino-terephthalsäure, an Polyphosphorsäure oder einem sauren Polyphosphorsäuremethylester als Kondensationsmittel, bei einer Temperatur von 100 bis 150 °C, Hydrolyse in Wasser, Isolieren und Neutralwaschen des Rohchinacridons und Überführen in die γ-Phase durch Erhitzen in polaren organischen Lösemitteln, das dadurch gekennzeichnet ist, dass man die wässrige Suspension des Rohchinacridons in Gegenwart von niederen Alkoholen oder Ketonen einer intensiven Mahlung unterwirft und anschliessend auf Temperaturen von 80–200 °C erhitzt.

Im folgenden werden einige bevorzugte Ausgestaltungen der Erfindung näher beschrieben:

Der Ringschluss findet vorzugsweise bei Temperaturen von 120–130 °C mit der etwa 3fachen Gewichtsmenge an Kondensationsmittel statt. Anschliessend wird die Schmelze zur Hydrolyse in die etwa 10fache Gewichtsmenge Wasser, vorzugsweise Eiswasser, gegeben und das Rohchinacridon abfiltriert, und mit Wasser neutral gewaschen.

Zweckmässig wird das so erhaltene wässrig-feuchte etwa 20- bis 22gewichtsprozentige Rohchinacridon mit der etwa 2- bis 5fachen Gewichtsmenge, bezogen auf den Chinacridongehalt, an Lösemittel und gegebenenfalls weiterem Wasser angerührt und der Nassmahlung unterworfen. Das nach der Mahlung erhaltene desagglomerierte Rohchinacridon der α-Kristallphase wird dann im geschlossenen Gefäss unter Rühren etwa 4–6 Stunden auf Temperaturen von 100–170 °C, vorzugsweise 125–160 °C, insbesondere 125–150 °C erhitzt.

Als geeignete Nasszerkleinerungsmaschinen für das erfindungsgemässe Verfahren können Kolloidmühlen, Korundscheibenmühlen, Zahnscheibenmühlen oder Rührwerkskugelmühlen und ähnlich wirkende Geräte eingesetzt werden.

Als Lösemittel werden bei dem erfindungsgemässen Verfahren niedere Alkohole und Ketone eingesetzt, insbesondere Alkanole und Dialkylketone mit jeweils bis zu 6 Kohlenstoffatomen, wie z.B. Methanol, Äthanol, n-Propanol, iso-Propanol, n-Butanol, sek. Butanol, iso-Butanol, Pentanol, Hexanol, Aceton, Methyl-äthylketon, Diäthylketon oder Methyl-isobutylketon. Es ist möglich, das Wasser vor dem Erhitzen abzutrennen, vorteilhaft wird jedoch im wässrig-organischen Medium erhitzt.

Die nach dem angegebenen Verfahren erhaltenen Pigmente stellen die reine γ-Kristallmodifikation des linearen Chinacridons dar. Die Pigmente zeichnen sich durch hohe Farbstärke, reinen Farbton und gute Dispergierbarkeit in Lacksystemen und beim Einfärben von Kunststoffen aus.

Es war überraschend und nicht zu erwarten, dass das Rohchinacridon, das als loses Agglomerat extrem feiner Teilchen vorliegt, durch Mahlen in eine solche Form gebracht wird, die sich nach dem neuen Verfahren problemlos in die γ-Kristallmodifikation umwandeln lässt.

In den folgenden Beispielen beziehen sich Prozentangaben auf das Gewicht, wenn nichts anderes angegeben ist.

Beispiel 1

10 Gewichtsteile 2,5-Dianilino-terephthalsäure werden bei 110–120 °C unter Rühren in 30 Gewichtsteile Polyphosphorsäure mit einem $P_2O_5$-Gehalt von 84,2% eingetragen; anschliessend wird 1–2 Stunden bei 120–130 °C nachgerührt. Die heisse Schmelze wird durch Eingiessen in 90 Gewichtsteile Wasser hydrolysiert und das ausgeschiedene Rohchinacridon abfiltriert und säurefrei gewaschen.

Das so erhaltene wässrig-feuchte Rohchinacridon (Feststoffgehalt ca. 22%) wird in 48 Gewichtsteilen Methyl-isobutylketon und 12-Gewichtsteilen Wasser angerührt und zweimal über eine Kolloid-Mühle («PUC»-Mühle) gemahlen; anschliessend wird die Chinacridonsuspension im geschlossenen Gefäss auf 140–150 °C geheizt und 4 Stunden bei dieser Temperatur unter Rühren gehalten. Nach dem Abkühlen auf 80 °C wird das Keton mit Wasserdampf abdestilliert, das Pigment abfiltriert, mit Wasser gewaschen und getrocknet. Das auf diese Weise erhaltene blaustichig-rote Pigment ist das lineare Chinacridon in der reinen γ-Kristallform. Es zeichnet sich durch Kornweichheit, gute Dispergierbarkeit und sehr reinen Farbton aus.

Vergleichsbeispiel

Heizt man nach dem Anrühren sofort auf 140–150 °C und hält 4 Stunden bei dieser Temperatur, so erhält man ein Produkt, das wesentlich blauer als das nach Beispiel 1 erhaltene ist und neben der γ-Modifikation grössere Mengen β-Phase enthält.

Beispiel 2

2 Gewichtsteile des nach Beispiel 1 erhaltenen feuchten ca. 22prozentigen Rohchinacridons werden mit 1 Gewichtsteil Äthylalkohol, 96prozentig, und 2 Gewichtsteilen Wasser verrührt. Die Suspension wird dann viermal über eine Zahnscheibenmühle gemahlen. Die erhaltene pastöse Mischung wird im geschlossenen Gefäss unter Rühren auf 125–135 °C geheizt und 4 Stunden bei dieser Temperatur gehalten. Nach dem Abkühlen auf 70 °C wird der Äthylalkohol abdestilliert, das Pigment abfiltriert und getrocknet. Man erhält das lineare Chinacridon in reiner γ-Kristallform.

Vergleichsbeispiel

Heizt man ohne Mahlung auf 125–135 °C und rührt bei dieser Temperatur nach, so erhält man ein Pigment, das neben der γ-Modifikation noch β-Modifikation enthält und dessen Farbton blauer ist.

Beispiel 3

In 9 Gewichtsteilen sauren Polyphosphorsäuremethylester ($P_2O_5$-Gehalt 81,5–82,5%) werden bei 120–125 °C unter Rühren 3 Gewichtsteile 2,5-Dianilino-terephthalsäure eingetragen und zum linearen Chinacridon kondensiert. Die Ringschlussschmelze wird in 30 Gewichtsteilen Wasser hydrolysiert. Das abgeschiedene Rohchinacridon wird abfiltriert und säurefrei gewaschen.

Das so erhaltene wässrig-feuchte ca. 20- bis 22prozentige Rohchinacridon wird in 18 Gewichtsteilen Isobutanol (ca. 80prozentig) angerührt und über eine Zahnscheibenmühle («Supraton»-Mühle) gemahlen. Anschliessend wird unter Rühren auf 140–160 °C geheizt und 4 Stunden bei dieser Temperatur gehalten. Nach dem Abkühlen auf 80 °C wird das Isobutanol mit Wasserdampf abdestillisiert, anschliessend das Pigment abfiltriert, mit Wasser gewaschen und getrocknet. Das blaustichig-rote, in Lacksystemen gut dispergierbare farbstarke Pigment liegt in der γ-Kristallmodifikation vor.

## Vergleichsbeispiel

Wird ohne Mahlung auf Finishtemperatur geheizt, so wird ein rot-violettes Pigment, das neben der γ-Phase deutliche Mengen an β-Phase enthält, erhalten.

## Beispiel 4

100 Gewichtsteile des nach Beispiel 1 erhaltenen ca. 22prozentigen feuchten Rohchinacridons werden in 75 Gewichtsteilen Aceton und 75 Gewichtsteilen Wasser angerührt und zweimal durch eine Rührwerkskugelmühle gemahlen. Anschliessend wird die Suspension unter Rühren im geschlossenen Gefäss auf 140–150 °C geheizt und 6 Stunden bei dieser Temperatur gehalten. Das abgekühlte Gemisch wird filtriert, der Rückstand mit Wasser gewaschen und getrocknet. Man erhält das lineare Chinacridon in der reinen γ-Kristallform.

## Vergleichsbeispiel

Heizt man ohne Mahlung auf Finishtemperatur, so isoliert man nach dem Abkühlen ein rot-violettes, β-Phase enthaltendes Chinacridon der γ-Phase.

## Patentansprüche

1. Verfahren zur Herstellung der γ-Modifikation des unsubstituierten linearen trans-Chinacridons durch Ringschluss der 2,5-Dianilino-terephthalsäure mit der 2,5- bis 4fachen Gewichtsmenge, bezogen auf 2,5-Dianilino-terephthalsäure, an Polyphosphorsäure oder einem sauren Polyphosphorsäuremethylester als Kondensationsmittel, bei einer Temperatur von 100–150 °C, Hydrolyse in Wasser, Isolieren und Neutralwaschen des Rohchinacridons und Überführen in die γ-Phase durch Erhitzen in polaren organischen Lösemitteln, dadurch gekennzeichnet, dass man die wässrige Suspension des Rohchinacridons in Gegenwart von niederen Alkoholen oder Ketonen einer intensiven Mahlung unterwirft und anschliessend auf Temperaturen von 80–200 °C erhitzt.

2. Verfahren nach Anspruch 1, dadurch gekennzeichnet, dass die Suspension nach der Mahlung auf 100–170 °C erhitzt wird.

3. Verfahren nach Ansprüchen 1 bis 2, dadurch gekennzeichnet, dass man die Suspension nach der Mahlung auf 125–160 °C erhitzt.

4. Verfahren nach Ansprüchen 1–3, dadurch gekennzeichnet, dass man den Ringschluss in der 3fachen Gewichtsmenge an Kondensationsmittel durchführt.

5. Verfahren nach Anspruch 1 bis 4, dadurch gekennzeichnet, dass man den Ringschluss bei 120–130 °C durchführt.

6. Verfahren nach Ansprüchen 1 bis 5, dadurch gekennzeichnet, dass man die Mahlung unter Zusatz der 2- bis 5fachen Gewichtsmenge an Lösemittel, bezogen auf das Cinacridon, durchführt.

7. Verfahren nach Anspruch 1 bis 6, dadurch gekennzeichnet, dass das Lösemittel ein Alkanol oder Dialkylketon mit bis zu 6 Kohlenstoffatomen ist.

8. Verfahren nach Ansprüche 1 bis 7, dadurch gekennzeichnet, dass man die nach der Mahlung erhaltene Suspension im geschlossenen Gefäss unter Rühren erhitzt.

9. Verfahren nach Ansprüchen 1 bis 8, dadurch gekennzeichnet, dass man die nach der Mahlung erhaltene Suspension 4 bis 6 Stunden erhitzt.

## Claims

1. Process for preapring the γ-modification of the unsubstituted linear trans-quinacridone by ring closure of 2,5-dianilino-terephthalic acid with the 2,5- to 4-fold amount by weight, referred to 2,5-dianilino-terephthalic acid, of polyphosphoric acid or of an acidic polyphosphoric acid methyl ester as condensation agent, at a temperature of 100–150 °C, hydrolysis in water, isolation and washing neutral the crude quinacridone and transformation into the γ-phase by heating in polar organic solvents, characterized in that the aqueous suspension of the crude quinacridone is subjected to an intensive grinding in the presence of lower alcohols or ketones and subsequently heated to temperatures of 80 to 200 °C.

2. Process according to claim 1, characterized in that the suspension is heated to 100 to 170 °C after grinding.

3. Process according to claims 1 and 2, characterized in that the suspension is heated to 125 to 160 °C after grinding.

4. Process according to claims 1 to 3, characterized in that the ring closure is effected in the 3-fold amount by weight of condensation agent.

5. Process according to claims 1 to 4, characterized in that the ring closure is effected at 120 to 130 °C.

6. Process according to claims 1 to 5, characterized in that the grinding is effected with addition of the 2- to 5-fold amount by weight of solvent, referred to quinacridone.

7. Process according to claims 1 to 6, characterized in that the solvent is an alcohol or dialkylketone with up to 6 carbon atoms.

8. Process according to claims 1 to 7, characterized in that the suspension obtained after grinding is heated in a closed vessel while stirring.

9. Process according to claims 1 to 8, characterized in that the suspension obtained after grinding is heated for 4 to 6 hours.

## Revendications

1. Procédé de préparation de la variété γ de la trans-quinacridone linéaire non substituée, par cyclisation de l'acide dianilino-2,5 téréphtalique au moyen de 2,5 à 4 fois son poids d'acide polyphosphorique ou d'un polyphosphate de méthyle acide en tant qu'agent de condensation, à une température de 100 à 150 °C, hydrolyse dans l'eau, isolement et lavage à neutralité de la quinacridone brute, et transformation de celle-ci en la phase γ par chauffage dans des solvants organiques polaires procédé caractérisé en ce qu'on soumet la suspension aqueuse de la quinacridone brute, en présence d'alcools ou de cétones inférieurs, à un broyage énergique, puis on chauffe à des températures de 80 à 200 °C.

2. Procédé selon la revendication 1, caractérisé en ce qu'on chauffe la suspension, après le broyage, à une température de 100 à 170 °C.

3. Procédé selon l'une des revendications 1 et 2, caractérisé en ce qu'on chauffe la suspension, après le broyage, à une température de 125 à 160 °C.

4. Procédé selon l'une quelconque des revendication 1 à 3, caractérisé en ce qu'on effectue la cyclisation dans une quantité de l'agent de condensation représentant, en poids, le triple de la quantité d'acide dianilino-2,5 téréphtalique.

5. Procédé selon l'une quelconque des revendications 1 à 4, caractérisé en ce qu'on effectue la cyclisation à une température de 120 à 130°C.

6. Procédé selon l'une quelconque des revendications 1 à 5, caractérisé en ce qu'on effectue le broyage en ajoutant une quantité de solvant représentant, en poids, 2 à 5 fois la quantité de quinacridone.

7. Procédé selon l'une quelconque des revendications 1 à 6, caractérisé en ce que le solvant est un alcanol ou une dialkyl-cétone contenant au plus 6 atomes de carbone.

8. Procédé selon l'une quelconque des revendications 1 à 7, caractérisé en ce qu'on chauffe la suspension obtenue après le broyage, dans un récipient fermé, tout en agitant.

9. Procédé selon l'une quelconque des revendications 1 à 8, caractérisé en ce qu'on chauffe pendant 4 à 6 heures la suspension obtenue après le broyage.